# EUROPÄISCHE PATENTSCHRIFT

(11) **EP 2 802 493 B1**
(45) Veröffentlichungstag und Bekanntmachung des Hinweises auf die Patenterteilung: **16.03.2016**
(21) Anmeldenummer: 12809658.3
(22) Anmeldetag: 07.12.2012
(51) Int. Cl.: B60T 8/36

(54) **HYDRAULIKAGGREGAT**
HYDRAULIC UNIT
GROUPE HYDRAULIQUE

(30) Priorität: 11.01.2012 DE 102012200318; 21.03.2012 DE 102012204526
(43) Veröffentlichungstag der Anmeldung: 19.11.2014
(73) Patentinhaber: Continental Teves AG&Co. Ohg, 60488 Frankfurt (DE)
(72) Erfinder: HEISE, Andreas, 64390 Erzhausen (DE)
(86) Internationale Anmeldenummer: PCT/EP2012/074773
(87) Internationale Veröffentlichungsnummer: WO 2013/104469

(56) Entgegenhaltungen:
- EP-A2- 0 882 632
- EP-A2- 1 772 334
- WO-A1-00/46089
- DE-A1- 19 732 038
- DE-A1- 19 916 985

## Beschreibung

Die Erfindung betrifft ein Hydraulikaggregat nach dem Oberbegriff des Patentanspruchs 1.

Die EP 0 975 500 B1 beschreibt ein Hydraulikaggregat, mit einem Motorgehäuse zur Aufnahme von Bauteilen eines Elektromotors und mit einem Pumpengehäuse zur Aufnahme von Bauteilen einer Pumpe, die zur Förderung von Druckmittel vom Elektromotor angetrieben ist, mit wenigstens einer Durchgangsbohrung im Pumpengehäuse zur Befestigung des Motorgehäuses mittels einer Schraube am Pumpengehäuse, sowie mit einem Steuergerät, das auf der zum Motorgehäuse entgegengesetzten Seite des Pumpengehäuses angeordnet ist. Zur Verschraubung des Steuergeräts mit dem Motor- und Pumpengehäuse weist das Steuergerät eine Gewindebuchse auf, die in dem aus Kunststoff hergestellten Gehäuse des Steuergeräts fixiert ist. Die Notwendigkeit zur Verwendung von Gewindebuchsen als auch die Fixierung der Gewindebuchse im Steuergerät stellt produktionstechnisch einen Nachteil dar.

Aus der EP 0 882 632 A2 ist ein Hydraulikaggregat der gattungsbildenden Art bekannt, dessen Motorgehäuse mittels zweier Schrauben an einem Pumpengehäuse befestigt ist, wozu das Pumpengehäuse zwei Löcher aufweist, die mit einem Innengewinde versehen sind, in welche die Schrauben des Motorgehäuses eingedreht sind.

r Die Aufgabe der vorliegenden Erfindung besteht nunmehr darin, ein Hydraulikaggregat anzugeben, das mit möglichst einfachen, kostengünstigen und funktionssicheren Mitteln eine besonders rationelle Befestigung des Motorgehäuses mit dem Pumpengehäuse ermöglicht, wobei bei Wunsch oder Bedarf die gewählte Befestigung auch für die Fixierung des Steuergeräts am Pumpengehäuse uneingeschränkt geeignet sein soll.

Diese Aufgabe wird für einen Hydraulikaggregat der angegebenen Art erfindungsgemäß durch die kennzeichnenden Merkmale des Patentanspruchs 1 gelöst.

Weitere Merkmale und Vorteile der Erfindung werden nachfolgend anhand der Beschreibung eines Ausführungsbeispiels anhand einer Zeichnung verdeutlicht.

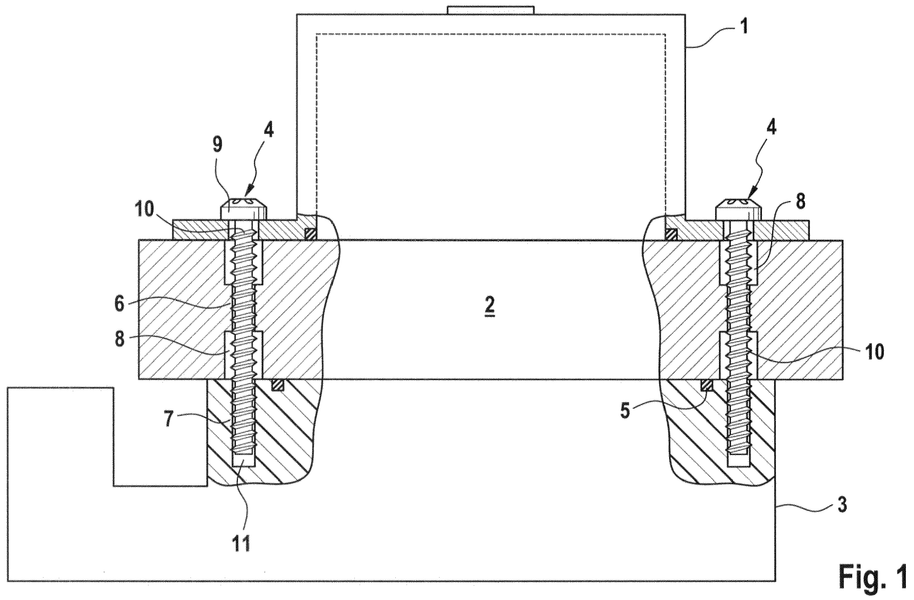

Die Figur 1 zeigt in einer schematischen Darstellung ein Hydraulikaggregat, bestehend aus einem Motorgehäuse 1 zur Aufnahme von Bauteilen eines Elektromotors und mit einem Pumpengehäuse 2 zur Aufnahme von Bauteilen einer Pumpe, die zur Förderung von Druckmittel vom Elektromotor angetrieben wird, mit jeweils einer zu beiden Seiten des Motorgehäuses 1 im Pumpengehäuse 2 angeordneten Durchgangsbohrung 8 zwecks Befestigung des Motorgehäuses 1 mittels zweier Schrauben 4 am Pumpengehäuse 2, sowie mit einem Steuergerät 3, das auf der zum Motorgehäuse 1 entgegengesetzten Flanschseite des Pumpengehäuses 2 angeordnet ist.

Zur rationellen Befestigung der beschriebenen Baugruppen sieht die Erfindung vor, dass jeweils in einer der beiden Durchgangsbohrungen 8 des Pumpengehäuses 2 ein Haltebereich 6 für die zugehörige Schraube 4 vorgesehen ist, wozu der Haltebereich 6 ein während des Schrauben-Eindrehvorgangs unmittelbar durch das Gewinde der Schraube 4 ein Innengewinde in dem Haltebereich 6 hergestellt ist, das bevorzugt durch ein mit minimaler Spanbildung verbundenes Furchen der Schraube 4 oder durch ein Schneiden der Schraube 4 während der Eindrehbewegung in den Haltebereich 6 zustande kommt. Bevorzugt erstreckt sich jede Schraube 4 zur weiteren Befestigung des Steuergerätes 3 am Pumpengehäuse 2 bis in einen weiteren Haltebereich 7 innerhalb des Steuergerätes 3, sodass analog zur Befestigung des Motorgehäuses 1 am Pumpengehäuse 2 auch das Steuergerät 3 in einem Arbeitsgang beim Eindrehen der Schrauben 4 am Pumpengehäuse 2 fixiert wird. Auch der im Gehäuse des Steuergeräts 3 vorgesehene weitere Haltebereich 7 weist analog zum Pumpengehäuse 2 jeweils ein während des Eindrehvorgangs der Schraube 4 in den weiteren Haltebereich 7 ein durch das Gewinde 10 der Schraube 4 selbsttätig geschnittenes oder bevorzugt gefurchtes Innengewinde auf, sodass jede Schraube 4 besonders vorteilhaft nach dem Funktionsprinzip einer Furch- oder Schneidschraube im Haltebereich 7 des Steuergeräts 3 ein Innengewinde herstellt, das die erforderliche Verbindung zwischen der Schraube 4 und dem Haltebereich 7 sicherstellt. Entsprechend der gewählten zweckmäßigen Ausführung weist jeder im Randbereich des Steuergeräts 3 vorgesehene weitere Haltebereich 7 eine Sackbohrung 11 auf, in die sich die zugehörige Schraube 4 mit ihrem selbstfurchenden bzw. selbstschneidenden Gewinde 10 in das Steuergerät 3 erstreckt.

Infolge der Verteilung der Befestigungskräfte der Schrauben 4 auf den Haltebereich 6 im Pumpengehäuse 2 und den weiteren Haltebereich 7 im Steuergerät 3 kommt es zu keiner Überbeanspruchung der Innengewinde, insbesondere in dem in der Regel in einem Kunststoffgehäuse des Steuergeräts 3 unmittelbar selbstfurchend bzw. selbstschneidend durch die Schrauben 4 hergestellten Innengewindes, womit sich eine besonders kostengünstige und dennoch sichere Befestigung des Steuergeräts 3 am Pumpengehäuse 2 ergibt. Die zur Grundpositionierung des Motorgehäuses 1 am Pumpengehäuse 2 erforderliche Zustellung der Schrauben 4 wird durch den Haltebereich 6 im Pumpengehäuse 2 gewährleistet, wozu herstelltechnisch der Haltebereich 6 des Pumpengehäuses 2 besonders wirtschaftlich aus einem Leichtmetall, vorzugsweise aus einem Aluminium-Strangpressprofil gefertigt ist, während hingegen der weitere Haltebereich 7 des Steuergeräts 3 besonders kostengünstig aus dem bereits erwähnten Kunststoff besteht.

Eine besonders sichere mechanische Bauteileverbindung ergibt sich, wenn zur geschilderten Schraubverbindung des Motorgehäuses 1 mit dem Pumpengehäuse 2 zusätzlich eine Klebeverbindung zwischen dem Motorgehäuse 1 und dem Pumpengehäuse 2 vorgesehen ist. Analog hierzu ist bei Wunsch oder Bedarf zusätzlich zur geschilderten Verschraubung des Pumpengehäuses 2 mit dem Steuergerät 3 eine Klebeverbindung zwischen dem Pumpengehäuse 2 und dem Steuergerät 3 vorgesehen, die abhängig von den Eigenschaften der gewählten Klebeverbindung ggf. auch wieder gelöst werden kann, um einen Austausch einzelner Baugruppen zu ermöglichen. Im Hinblick auf die geforderte Spritzwasserunempfindlichkeit des Hydraulikaggregats ist die Klebeverbindung als Dichtverbindung entsprechend flüssigkeitsundurchlässig ausgeführt.

Alternativ oder auch ergänzend zur beschriebenen Klebeverbindung ist entsprechend der Darstellung in Figur 1 zwischen dem Motorgehäuse 1 und dem Pumpengehäuse 2 als auch zwischen dem Steuergerät 3 und dem Pumpengehäuse 2 jeweils eine Einlegedichtung 5 in die am Motorgehäuse 1 und in die am Gehäuse des Steuergeräts 3 umlaufende Nuten vorstellbar, womit eine optimale Dichtwirkung erzielt wird. Anstelle der Einlegedichtung 5 ist ebenso die Verwendung von flüssig aufgetragener Dicht- und Klebemasse (z.B. Silikon) möglich.

Die Erfindung zeigt somit eine Verschraubungstechnik, welche es erlaubt das Motorgehäuse 1 am Pumpengehäuse 2 als auch das Steuergerät 3 am Pumpengehäuse 2 in einem automatengerechten Zuführprozess miteinander zu verbinden, indem das Steuergerät 3 und das Motorgehäuse 1 lediglich auf beide diametralen Flanschflächen des Pumpengehäuses 2 aufgesetzt werden und durch Eindrehen der beiden Schrauben 4 entsprechend der Eindrehrichtung nacheinander am Pumpengehäuse 2 sicher gehalten werden, sodass zunächst das Motorgehäuse 1 durch die beiden Schrauben 4 an das Pumpengehäuse 2 endfixiert wird, bevor das durchgehende Gewinde an den Schrauben 4 in den weiteren Haltebereich 7 des Steuergeräts 3 eindringt, um das Steuergerät 3 an dem Pumpengehäuse 2 zu fixieren.

Das beschriebene Befestigungskonzept eignet sich sowohl für Motor- und/oder Steuergerätegehäuse, welche mit eingelegten Dichtungen oder mit aufdispensten oder geklebten Dichtungen versehen sind.

Zusammenfassend sieht somit das vorgestellte Befestigungskonzept vor, dass die Schrauben 4 im Pumpengehäuse 2 in einem durch die Schrauben 4 im Pumpengehäuse 2 selbst gefurchten/geschnittenen Innengewinde die Vorspannkraft für das Anziehen des Motorgehäuses 1 an das Pumpengehäuse 2 gewährleisten, und dass die gleichen Schrauben 4 im Kunststoffgehäuse des Steuergeräts 3 in nicht zwingend vorgefertigten Löchern oder Sacklöchern selbstfurchend das während des Montageprozesses bereits auf Position gebrachte Steuergerätegehäuse dauerhaft auf dieser Position fixieren.

Die Schrauben 4 bewegen also das Motorgehäuse 1 mittels der Schraubenköpfe 9 zur Grundpositionierung vorspannungsfrei gegen das Pumpengehäuse 2 und das Kunststoffgehäuse des Steuergeräts 3 wird schließlich durch die Gewindeenden der Schrauben 4, welche sich beim Eindrehen der Schrauben 4 in den weiteren Haltebereich 7 des Kunststoffgehäuses einfurchen bzw. einschneiden , an das Pumpengehäuse 2 vorspannungsfrei zur Grundpositionierung angelegt.

Hierzu weisen die Schrauben 4 ein durchgängiges Gewinde 10 mit einer konstanten Gewindesteigung auf, wobei die Schrauben 4 bei Wunsch oder Bedarf einen gestuften Durchmesser haben können. Eine Verklebung des Motorgehäuses 1 und/oder des Steuergerätegehäuses mit dem Pumpengehäuse 2 führt schließlich nach der Trocknung des Klebers zu einer hohen Festigkeit in der Klebeverbindung.

Im Fertigungsprozess ist das Steuergerät 3 gegenüber dem Pumpengehäuse 2 relativ einfach auszurichten und an das Pumpengehäuse 2 anzudrücken, während die Schrauben 4 eingedreht werden.

Hilfsmittel, z.B. Clips oder Montagespangen, welche bei Reparatur oder Austausch das Steuergerät 3 zumindest für den Zeitraum des Verschraubens das Motorgehäuse 1 auf Position am Pumpengehäuse 2 halten, um u.a. die Dichtung hinreichend zu komprimieren, stellen hierbei einen relativ geringem Aufwand dar.

Schließlich soll kurz auf die Besonderheiten der an den Schrauben 4 vorgesehenen Gewinde 10 eingegangen werden, die je nach gewählter Gewindegeometrie selbstfurchend oder selbstschneidend ausgebildet sind. Der wesentliche Unterschied zwischen einem selbstfurchenden und einem selbstschneidenden Gewinde 10 ist dadurch gekennzeichnet, dass bei einem selbstfurchenden Gewinde 10 gegenüber dem selbstschneidenden Gewinde 10 beim Eindrehen der Schraube 4 in den Haltebereich 6, 7 keine erwähnenswerte Gewindespäne entstehen, sodass infolge des geringeren Materialabtrags selbstfurchende Schrauben 4 zu bevorzugen sind. Das Innenmaß der Durchgangsbohrung 8 als auch das Innenmaß der Sackbohrung 11 ist gemäß der Figur 1 zur ungehinderten Ausbildung der Gewinde im jeweiligen Haltebereich 6, 7 jeweils gegenüber der Nennweite der Sack- und Durchgangsbohrung im Innendurchmesser verkleinert.

Besonders vorteilhaft erweist sich im Rahmen der Erfindung die zusätzlich zur geschraubten Grundpositionierung des Motorgehäuses 1 am Pumpengehäuse 2 vorgesehene Klebeverbindung zwischen dem Motorgehäuse 1 und dem Pumpengehäuse 2, da die Klebekraft in der Klebeverbindung größer ist als die von der Schraube 4 auf den Haltebereich 6 übertragene Kraft zur Grundpositionierung des Motorgehäuses 1 am Pumpengehäuse 2. Analog hierzu ist zusätzlich zur geschraubten Grundpositionierung des Steuergeräts 3 am Pumpengehäuses 2 eine Klebeverbindung zwischen dem Pumpengehäuse 2 und dem Steuergerät 3 vorgesehen, wobei auch hier die Klebekraft in der Klebeverbindung größer ist als die von der Schraube 4 auf den weiteren Haltebereich 7 übertragene Kraft zur Grundpositionierung des Steuergerätes 3 am Pumpengehäuse 2.

### Bezugszeichenliste

- 1: Motorgehäuse
- 2: Pumpengehäuse
- 3: Steuergerät
- 4: Schraube
- 5: Einlegedichtung
- 6: Haltebereich
- 7: Haltebereich
- 8: Durchgangsbohrung
- 9: Schraubenkopf
- 10: Gewinde
- 11: Sackbohrung

## Patentansprüche

1. Hydraulikaggregat, mit einem Motorgehäuse (1) zur Aufnahme von Bauteilen eines Elektromotors und mit einem Pumpengehäuse (2) zur Aufnahme von Bauteilen einer Pumpe, die zur Förderung von Druckmittel vom Elektromotor angetrieben ist, mit wenigstens einer Durchgangsbohrung (8) im Pumpengehäuse (2) zur Befestigung des Motorgehäuses (1) mittels einer Schraube (4) am Pumpengehäuse (2), sowie mit einem Steuergerät (3), das auf der zum Motorgehäuse (1) entgegengesetzten Seite des Pumpengehäuses (2) angeordnet ist, **dadurch gekennzeichnet, dass** in der Durchgangsbohrung (8) ein Haltebereich (6) für die Schraube (4) vorgesehen ist, der ein durch das Gewinde der Schraube (4) während des Eindrehvorgangs in den Haltebereich (6) hergestelltes Innengewinde aufweist, und dass nach dem Aufsetzen des Steuergeräts (3) auf das Pumpengehäuse (2) die Schraube (4) zur Grundpositionierung des Steuergerätes (3) am Pumpengehäuse (2) mit seinem Gewinde (10) durch in den im Pumpengehäuse (2) vorgesehenen Haltebereich (6) bis in einen weiteren Haltebereich (7) innerhalb des Steuergerätes (3) vorspannungsfrei eingedreht ist

2. Hydraulikaggregat nach Anspruch 1, **dadurch gekennzeichnet, dass** durch das Eindrehen der Schraube (4) in den Haltebereich (6) ein selbstfurchendes oder selbstschneidendes Innengewinde in dem Haltebereich (6) hergestellt ist.

3. Hydraulikaggregat nach Anspruch 1, **dadurch gekennzeichnet, dass** nach dem Aufsetzen des Motorgehäuses (1) auf das Pumpengehäuse (2) die Schraube (4) ausschließlich zur Grundpositionierung des Motorgehäuses (1) am Pumpengehäuse (2) durch eine Öffnung im Motorgehäuse (1) eingeführt und mit seinem Gewinde (10) bis in den Haltebereich (6) innerhalb des Pumpengehäuses (2) vorspannungsfrei eingedreht ist.

4. Hydraulikaggregat nach Anspruch 1, **dadurch gekennzeichnet, dass** die Schraube (4) mit einem selbstfurchenden oder selbstschneidenden Gewinde (10) versehen ist, das mit dem weiteren Haltebereich (7) des Steuergeräts (3) in Eingriff steht.

5. Hydraulikaggregat nach Anspruch 4, **dadurch gekennzeichnet, dass** zur Grundpositionierung des Steuergeräts (3) am Pumpengehäuse (2) der weitere Haltebereich (7) eine Sackbohrung (11) aufweist, in der nach dem Aufsetzen des Steuergeräts (3) auf das Pumpengehäuse (2) ein Innengewinde durch das selbstfurchende oder selbstschneidende Gewinde (10) der Schraube (4) hergestellt ist.

6. Hydraulikaggregat nach Anspruch 1, **dadurch gekennzeichnet, dass** der Haltebereich (6) des Pumpengehäuses (2) aus einem Leichtmetall, vorzugsweise aus einem Aluminium-Strangpressprofil, gefertigt ist.

7. Hydraulikaggregat nach Anspruch 1, **dadurch gekennzeichnet, dass** der weitere Haltebereich (7) des Steuergeräts (3) aus einem Kunststoff hergestellt ist.

8. Hydraulikaggregat nach Anspruch 5, **dadurch gekennzeichnet, dass** das Innenmaß der Durchgangsbohrung (8) als auch das Innenmaß der Sackbohrung (11) zur Ausbildung der Gewinde im jeweiligen Haltebereich (6, 7) jeweils gegenüber der Nennweite der Sack- und Durchgangsbohrung im Innendurchmesser verkleinert ist.

9. Hydraulikaggregat nach einem der vorangegangenen Ansprüche, **dadurch gekennzeichnet, dass** zusätzlich zur geschraubten Grundpositionierung des Motorgehäuses (1) am Pumpengehäuse (2) eine Klebeverbindung zwischen dem Motorgehäuse (1) und dem Pumpengehäuse (2) vorgesehen ist, wobei die Klebekraft in der Klebeverbindung größer ist als die von der Schraube (4) auf den Haltebereich (6) übertragene Kraft zur Grundpositionierung des Motorgehäuses (1) am Pumpengehäuse (2).

10. Hydraulikaggregat nach Anspruch 1, **dadurch gekennzeichnet, dass** zusätzlich zur geschraubten Grundpositionierung des Steuergeräts (3) am Pumpengehäuses (2) eine Klebeverbindung zwischen dem Pumpengehäuse (2) und dem Steuergerät (3) vorgesehen ist, wobei die Klebekraft in der Klebeverbindung größer ist als die von der Schraube (4) auf den weiteren Haltebereich (7) übertragene Kraft zur Grundpositionierung des Steuergerätes (3) am Pumpengehäuse (2).

11. Hydraulikaggregat nach Anspruch 7 oder 8, **dadurch gekennzeichnet, dass** die Klebeverbindung flüssigkeitsundurchlässig ausgeführt ist.

12. Hydraulikaggregat nach Anspruch 1, **dadurch gekennzeichnet, dass** zwischen dem Motorgehäuse (1) und dem Pumpengehäuse (2) eine Einlegedichtung (5) vorgesehen ist.

13. Hydraulikaggregat nach Anspruch 1, **dadurch gekennzeichnet, dass** zwischen dem Steuergerät (3) und dem Pumpengehäuse (2) eine Einlegedichtung (5) vorgesehen ist.

## Claims

1. Hydraulic unit having a motor housing (1) for accommodating components of an electric motor and having a pump housing (2) for accommodating components of a pump, which is driven by the electric motor in order to pump pressure medium, having at least one through hole (8) in the pump housing (2) for fastening the motor housing (1) on the pump housing (2) by means of a screw (4), and having a control device (3), which is arranged on the opposite side of the pump housing (2) from the motor housing (1), **characterized in that** a retaining region (6) for the screw (4) is provided in the through hole (8), said retaining region having an internal thread produced in the retaining region (6) by the thread of the screw (4) during the screw-in process, and **in that**, after the placement of the control device (3) on the pump housing (2), the screw (4) is screwed without a preload through the retaining region (6) provided in the pump housing (2) and into a further retaining region (7) within the control device (3) by means of its thread (10) in order to ensure basic positioning of the control device (3) on the pump housing (2).

2. Hydraulic unit according to Claim 1, **characterized in that** a self-forming or self-cutting internal thread is produced in the retaining region (6) by screwing the screw (4) into the retaining region (6).

3. Hydraulic unit according to Claim 1, **characterized in that**, after the placement of the motor housing (1) on the pump housing (2), the screw (4) is introduced through an opening in the motor housing (1) and screwed without a preload into the retaining region (6) within the pump housing (2) by means of its thread (10), the purpose being exclusively the basic positioning of the motor housing (1) on the pump housing (2).

4. Hydraulic unit according to Claim 1, **characterized in that** the screw (4) is provided with a self-forming or self-cutting thread (10), which is in engagement with the further retaining region (7) of the control device (3).

5. Hydraulic unit according to Claim 4, **characterized in that**, for basic positioning of the control device (3) on the pump housing (2), the further retaining region (7) has a blind hole (11), in which an internal thread is produced by the self-forming or self-cutting thread (10) of the screw (4) after the placement of the control device (3) on the pump housing (2).

6. Hydraulic unit according to Claim 1, **characterized in that** the retaining region (6) of the pump housing (2) is manufactured from a light metal, preferably from an extruded aluminum section.

7. Hydraulic unit according to Claim 1, **characterized in that** the further retaining region (7) of the control device (3) is produced from a plastic.

8. Hydraulic unit according to Claim 5, **characterized in that** the inside dimension of the through hole (8) and the inside dimension of the blind hole (11) are each reduced in inside diameter relative to the nominal size of the blind hole and of the through hole in the respective retaining regions (6, 7) to allow the formation of the threads.

9. Hydraulic unit according to one of the preceding claims, **characterized in that** an adhesive joint is provided between the motor housing (1) and the pump housing (2) in addition to the screwed basic positioning of the motor housing (1) on the pump housing (2), wherein the adhesive bonding force in the adhesive joint is greater than the force transmitted by the screw (4) to the retaining region (6) for the basic positioning of the motor housing (1) on the pump housing (2).

10. Hydraulic unit according to Claim 1, **characterized in that** an adhesive joint is provided between the pump housing (2) and the control device (3) in addition to the screwed basic positioning of the control device (3) on the pump housing (2), wherein the adhesive bonding force in the adhesive joint is greater than the force transmitted by the screw (4) to the further retaining region (7) for the basic positioning of the control device (3) on the pump housing (2).

11. Hydraulic unit according to Claim 7 or 8, **characterized in that** the adhesive joint is embodied so as to be impermeable to liquid.

12. Hydraulic unit according to Claim 1, **characterized in that** an inserted seal (5) is provided between the motor housing (1) and the pump housing (2).

13. Hydraulic unit according to Claim 1, **characterized in that** an inserted seal (5) is provided between the control device (3) and the pump housing (2).

## Revendications

1. Machine hydraulique présentant un boîtier (1) de moteur qui reprend des composants d'un moteur électrique et un boîtier (2) de pompe qui reprend des composants d'une pompe entraînée par le moteur électrique pour refouler un fluide sous pression,
au moins un alésage de passage (8) ménagé dans le boîtier (2) de la pompe pour fixer le boîtier (1) du moteur au moyen d'une vis (4) sur le boîtier (2) de la pompe
et un appareil de commande (3) disposé sur le côté du boîtier (2) de la pompe opposé au boîtier (1) du moteur,
**caractérisée en ce que**
une partie de maintien (6) de la vis (4) qui présente un filet intérieur formé dans la partie de maintien (6) par le filet de la vis (4) pendant l'opération de vissage est prévue dans l'alésage de passage (8) et
**en ce qu'**après le placement de l'appareil de commande (3) sur le boîtier (2) de la pompe, la vis (4) est vissée sans précontrainte pour le positionnement de base de l'appareil de commande (3) sur le boîtier (2) de la pompe, avec son filet (10) s'étendant à travers la partie de maintien (6) prévue dans le boîtier (2) de la pompe jusqu'à une autre partie de maintien (7) prévue à l'intérieur de l'appareil de commande (3).

2. Machine hydraulique selon la revendication 1, **caractérisée en ce que** le vissage de la vis (4) dans la partie de maintien (6) forme dans la partie de maintien (6) un filet intérieur auto-alésant ou auto-coupant.

3. Machine hydraulique selon la revendication 1, **caractérisée en ce qu'**après le placement du boîtier (1) du moteur sur le boîtier (2) de la pompe, la vis (4) est insérée à travers une ouverture du boîtier (1) du moteur uniquement pour le positionnement de base du boîtier (1) du moteur sur le boîtier (2) de la pompe et est vissée sans précontrainte par son filet (10) à l'intérieur du boîtier (2) de la pompe jusque dans la partie de maintien (6).

4. Machine hydraulique selon la revendication 1, **caractérisée en ce que** la vis (4) est dotée d'un filet (10) auto-alésant ou auto-coupant qui engage l'autre partie de maintien (7) de l'appareil de commande (3).

5. Machine hydraulique selon la revendication 4, caractérisée risée en ce que pour le positionnement de base de l'appareil de commande (3) sur le boîtier (2) de la pompe, l'autre partie de maintien (7) présente un alésage aveugle (11) dans lequel, après le placement de l'appareil de commande (3) sur le boîtier (2) de la pompe, un filet intérieur est formé par le filet (10) auto-alésant ou auto-coupant de la vis (4).

6. Machine hydraulique selon la revendication 1, **caractérisée en ce que** la partie de maintien (6) du boîtier (2) de la pompe est réalisée en métal léger, de préférence à partir d'un profilé en aluminium extrudé.

7. Machine hydraulique selon la revendication 1, **caractérisée en ce que** l'autre partie de maintien (7) de l'appareil de commande (3) est réalisée en matière synthétique.

8. Machine hydraulique selon la revendication 5, **caractérisée en ce que** la dimension intérieure de l'alésage de passage (8) ainsi que la dimension intérieure de l'alésage aveugle (11) est d'un diamètre intérieur plus petit pour former le filet dans chaque partie de maintien (6, 7), chaque fois par rapport à la largeur nominale de l'alésage aveugle ou de l'alésage de passage.

9. Machine hydraulique selon la revendication 1, **caractérisée en ce qu'**en plus du positionnement de base vissé du boîtier (1) du moteur sur le boîtier (2) de la pompe, une liaison collée est prévue entre le boîtier (1) du moteur et le boîtier (2) de la pompe, la force d'adhérence de la liaison collée étant supérieure à la force transmise par la vis (4) sur la partie de maintien (6) pour le positionnement de base du boîtier (1) du moteur sur le boîtier (2) de la pompe.

10. Machine hydraulique selon la revendication 1, **caractérisée en ce qu'**en plus du positionnement de base vissé de l'appareil de commande (3) sur le boîtier (2) de la pompe, une liaison collée est prévue entre le boîtier (2) de la pompe et l'appareil de commande (3), la force d'adhérence de la liaison collée étant supérieure à la force transmise sur l'autre partie de maintien (7) par la vis (4) pour le positionnement de base de l'appareil de commande (3) sur le boîtier (2) de la pompe.

11. Machine hydraulique selon les revendications 7 ou 8, **caractérisée en ce que** la liaison collée est réalisée de manière à être imperméable aux liquides.

12. Machine hydraulique selon la revendication 1, **caractérisée en ce qu'**un joint d'étanchéité (5) est prévu entre le boîtier (1) du moteur et le boîtier (2) de la pompe.

13. Machine hydraulique selon la revendication 1, **caractérisée en ce qu'**un joint d'étanchéité (5) est prévu entre l'appareil de commande (3) et le boîtier (2) de la pompe.
